Europäisches Patentamt

European Patent Office

Office européen des brevets

(19)

(11) Veröffentlichungsnummer : **0 325 117 B1**

(12) # EUROPÄISCHE PATENTSCHRIFT

(45) Veröffentlichungstag der Patentschrift :
**16.10.91 Patentblatt 91/42**

(51) Int. Cl.⁵ : **B61H 5/00, B61H 13/24,**
**B61H 13/02**

(21) Anmeldenummer : **89100147.1**

(22) Anmeldetag : **05.01.89**

(54) **Drehgestellartiges Fahrwerk für Schienenfahrzeuge.**

(30) Priorität : **22.01.88 DE 3801833**
**29.06.88 DE 3821955**

(43) Veröffentlichungstag der Anmeldung :
**26.07.89 Patentblatt 89/30**

(45) Bekanntmachung des Hinweises auf die
Patenterteilung :
**16.10.91 Patentblatt 91/42**

(84) Benannte Vertragsstaaten :
**AT BE CH DE ES FR GB GR IT LI LU NL SE**

(56) Entgegenhaltungen :
**EP-A- 0 050 888**
**US-A- 3 939 779**

(73) Patentinhaber : **DUEWAG**
**AKTIENGESELLSCHAFT**
**Duisburger Strasse 145**
**W-4150 Krefeld-Uerdingen (DE)**

(72) Erfinder : **Braun, Otto**
**Burgerstrasse 11**
**W-4150 Krefeld 1 (DE)**
Erfinder : **Schraut, Rolf, Dr.-Ing.**
**Bonhoefferstrasse 25**
**W-4050 Mönchengladbach 1 (DE)**
Erfinder : **Sonder, Egbert**
**Grüner Weg 58**
**W-4950 Minden (DE)**

## Beschreibung

Die Erfindung betrifft ein drehgestellartiges Fahrwerk für Schienenfahrzeuge, dessen Rahmen jeweils ein Rad gabelförmig umgreifende und mit Lagern für das Rad versehene Arme aufweist, die jeweils zur Aufnahme einer im wesentlichen aus einem Bremszylinder, einer Bremszange und Bremsbacken bestehenden Radscheibenbremse ausgebildet sind.

Ein Fahrwerk mit den vorgenannten Merkmalen ist durch die EP-B-0050727 bekannt, wobei in dieser Patentschrift die Radscheibenbremse lediglich im Hintergrund behandelt wird. Die besagte Bremse erstreckt sich in der horizontalen Mittenebene des zugehörigen Rades ; dabei weist der Fahrwerkrahmen dem Durchtritt und der Abstützung der Bremszange dienende Ausnehmungen auf. Eine derartige Bremsanordnung hat einige Nachteile :

— Durch die vorgenannten Ausnehmungen wird der Fahrwerkrahmen geschwächt.

— Die Arme des Rahmens müssen einen, zumindest um die Dicke der beiden Bremsbacken vergrößerten Freiraum zueinander aufweisen.

— Die Radscheibenbremse ist schlecht zugänglich, wodurch deren Einbau und Wartungsarbeiten erschwert werden.

— Die Bremsbacken liegen hinter der Radwelle, also nicht im Fahrtwind und können sich deshalb schneller erhitzen.

— Die relativ nahe über der Schienenoberkante angeordneten Bremsbeläge verschmutzen eher.

Der Erfindung liegt die Aufgabe zugrunde, ein Fahrwerk der gattungsgemäßen Art auf möglichst einfache Weise so auszugestalten, daß die zuvor aufgezeigten nachteile vermieden sind ; überdies soll die Bremszange von den aus der Wirkverbindung Bremsbeläge-Radscheibe auftretenden Reaktionskräften freigehalten, insoweit also nicht auf Biegung beansprucht werden.

Diese Aufgabe wird erfindungsgemäß dadurch gelöst, daß die Radscheibenbremse oberhalb der Mittenebene des Rades auf den Armen und dem an diese angrenzenden Bereich des Fahrwerkrahmens angeordnet ist, wobei alle in Längsrichtung auftretenden Bremsreaktionskräft über Anschlagstücke, die jeweils nach oben ragend an den Armen befestigt sind und formschlüssig mit den Bremsbacken zusammenwirken, direkt in den Fahrwerkrahmen eingeleitet werden.

Eine besonders robuste und für die Montage günstige Anbringung der Bremsbacken wird nach einer Ausführungsform der Erfindung dadurch erreicht, daß jeder der beiden Arme einen Lagerbock aufweist, an dem eine Bremsbacke in Querrichtung pendelnd aufgehängt ist.

Gemäß einer nächsten Ausgestaltung der Erfindung ist der Lagerbock gegenüber der Oberseite des Armes abgefedert, beispielsweise durch eine dazwischen angeordnete Schicht aus elastischem Werkstoff. Durch diese kompakte, in den raum zwischen Fahrwerkrahmen und Fahrzeugaufbau passende Abfederung bleibt die ungefederte Masse, zu welcher der allerdings leichte, unmittelbar auf den Radwellen abgestützte Fahrwerkrahmen gehört, so klein wie möglich.

Vor allem im Hinblick auf einen langen wartungsfreien Einsatz der Bremse besteht eine weitere Ausgestaltung der Erfindung darin, daß zwischen den Anschlagstücken und den Bremsbacken ein Querspiel besteht, das dem zulässigen Verschleiß des Bremsbelages entspricht.

Eine nächste Ausführungsform der Erfindung sieht vor, daß der an die Arme angrenzende Bereich des Fahrwerkrahmens mit einer das bremszylinderseitige Ende der Radscheibenbremse tragenden Abstützung versehen ist.

Die vorgenannte Abstützung wird mit einem Minimum an Bauteilen und zugleich im Sinne der bereits erwähnten Abfederung der Bremse gegenüber dem Fahrwerkrahmen gemäß einer ergänzenden Ausbildung der Erfindung dadurch geschaffen, daß die Abstützung einen prismatisch ausgebildeten Federkörper und ein Verbindungsteil aufweist, das einerseits den Federkörper dachartig umfaßt und andererseits zusammen mit dem Festpunkthebel der Bremszange am Bremszylinder angeschlossen ist.

Nach einer weiteren Ausgestaltung der Erfindung sind die Radscheibenbremsen mittels einer durch ein Handbremsgetriebe betätigbaren Fernbedienung derart gekuppelt, daß die in Längsrichtung jeder Fahrwerkseite liegenden Radscheibenbremsen jeweils ein Bremspaar bilden. Durch die so geschaffene manuell betätigbare Bremseinrichtung wird gewährleistet, daß die vertikal bestehende freie Beweglichkeit des Fahrwerkrahmens und der daran gelagerten Einzelräder nicht beeinträchtigt ist.

Eine besonders einfache und funktionssichere Fernbedienung wird gemäß einer Ausführungsform der Erfindung dadurch erzielt, daß die Fernbedienung für jedes Bremspaar einen in Längsrichtung des Fahrwerkrahmens angeordneten Verbindungshebel und in rahmenseitig gehaltenen Ummantelungen geführte Bremszüge aufweist, die zum einen an den Enden des Verbindungshebels und an den entsprechenden Radscheibenbremsen — z.B. an einem Handbremshebel des Bremszylinders — angreifen und zum anderen mittig am Verbindungshebel und am Handbremsgetriebe angeschlossen sind.

2

In ergänzender erfindungsgemäßer Ausgestaltung ist vorgesehen, daß die Verbindungshebel auf Gleitbahnen des Fahrwerkrahmens in dessen Querrichtung geführt sind.

Die mit dem Gegenstand nach der Erfindung erzielbaren Vorteile liegen insbesondere darin, daß der Fahrwerkrahmen durchgehend ohne schwächende Ausnehmungen gestaltbar ist, wobei seine jeweils ein Rad umgreifenden Arme und damit auch die Radlager direkt neben dem Rad angeordnet sein können. All dies begünstigt die Leichtbauweise des Fahrwerkrahmens. Die Radscheibenbremse ist auch bei unter dem Fahrzeugaufbau befindlichem Fahrwerk einfach ein- und auszubauen sowie für Wartungsarbeiten zugänglich. Die Bremsbeläge liegen gut gekült im Fahrtwind und vor Schmutz geschützt hoch über der Schienenoberkante.

Ausführungsbeispiele der Erfindung sind in der Zeichnung vereinfacht dargestellt und werden im folgenden näher beschrieben. Es zeigen

Fig. 1     eine Bereich eines Fahrwerkes mit einer Radscheibenbremse, in Seitenansicht,

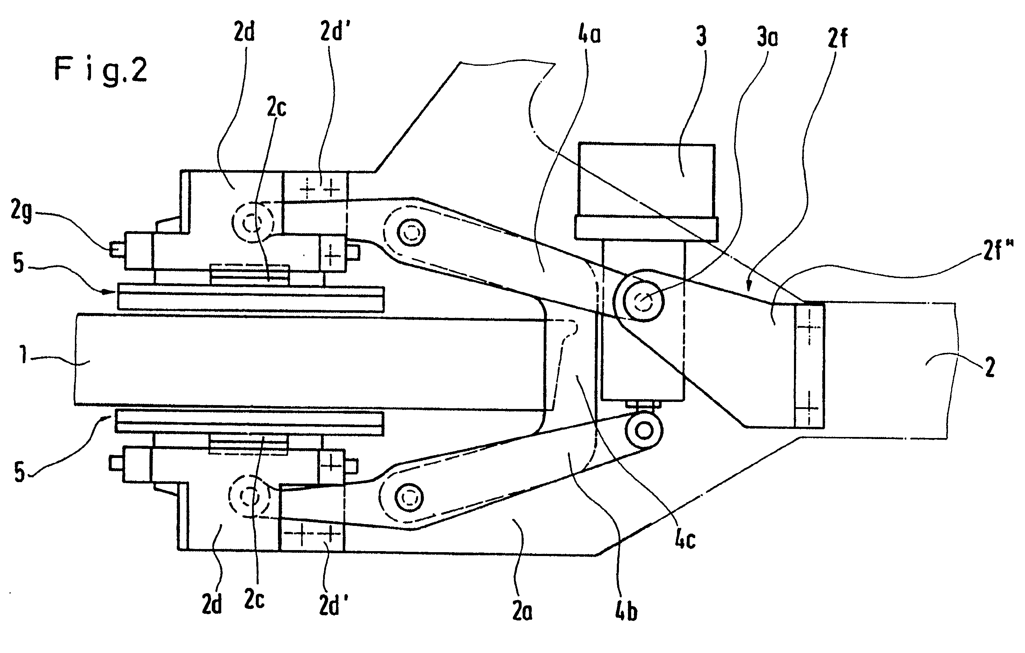

Fig. 2     die Draufsicht zu Fig. 1,

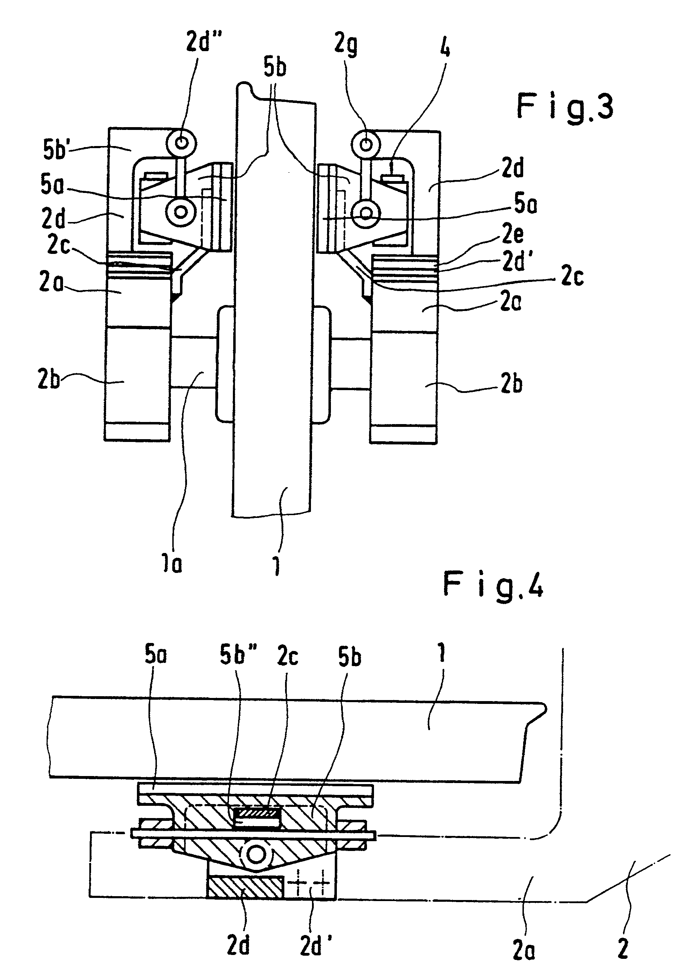

Fig. 3     die Vorderansicht zu Fig. 1,
Fig. 4     den Schnitt nach der Linie IV-IV in Fig. 1,
Fig. 5     die schematische Draufsicht auf ein Fahrwerk mit einer Handbremseinrichtung für die Radscheibenbremsen.

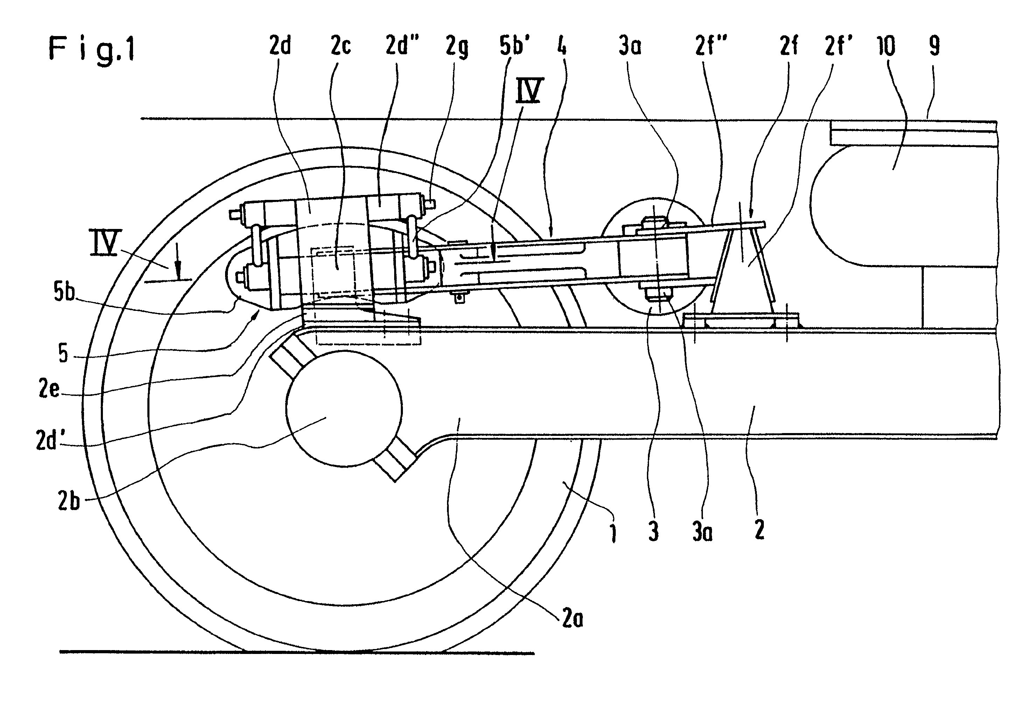

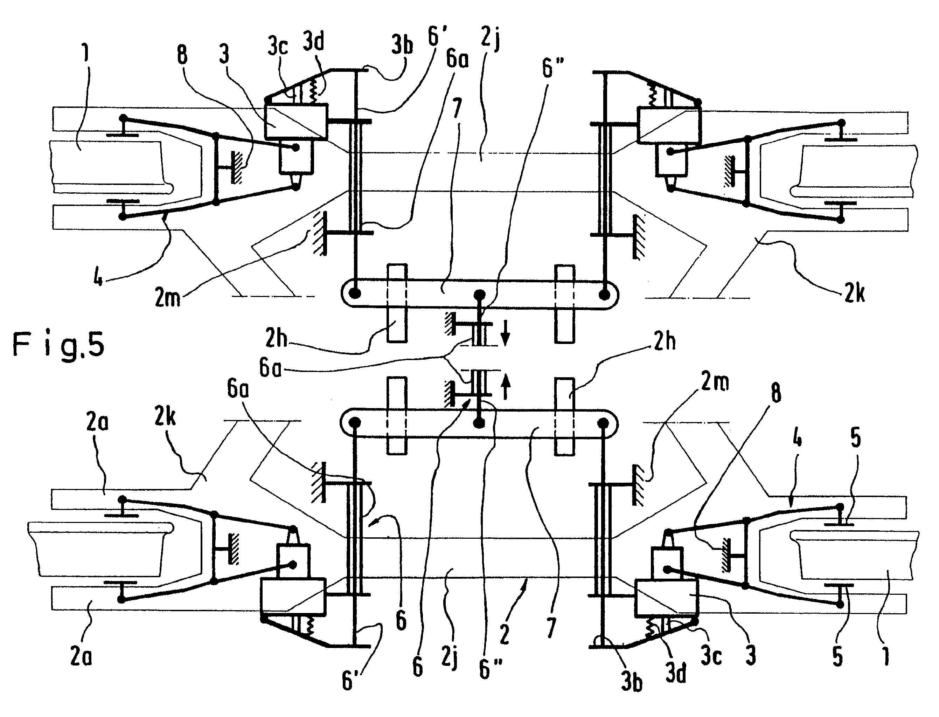

Der Rahmen 2 des Fahrwerkes (siehe Fig. 5) besteht im wesentlichen aus Rahmenwangen 2j, gabelförmit ausgebildeten Armen 2a und Auslegern 2k, die in Längsmitte der jeweils gegenüberliegenden Rahmenwangen 2j gelenkig gelagert sind, so daß der Fahrwerkrahmen 2 vertikal frei beweglich ist. Der Rahmen 2 trägt einen Fahrzeugaufbau 9 (siehe Fig. 1) über im Beispielsfall eine Luftfeder 10. Die gabelförmigen Arme 2a des Fahrwerkrahmens 2 sind mit Lagern 2b zur Aufnahme einer Radwelle 1a eines Einzelrades 1 versehen. Auf den Armen 2a und dem an diese angrenzenden Bereich des Fahrwerkrahmens 2 ist eine Radscheibenbremse angeordnet, die im wesentlichen aus einem Bremszylinder 3, einer Bremszange 4 — Festpunkthebel 4a, Zylinderhebel 4b und Bremshebelverbinder 4c — und Bremsbacken 5 besteht.

Die jeweils aus einem Bremsbelag 5a und einem Belaghalter 5b gebildeten Bremsbacken 5 sind an Lagerböcken 2d pendelnd aufgehängt, die auf den Armen 2a angeschraubt sind. Zwischen der Anschraubplatte 2d' des Lagerbockes und dessen aufwärts gerichtetem, oben eine Buchse 2d'' aufweisenden Teil befindet sich eine beidseitig anvulkanisierte Schicht 2e aus Gummi. An einer durch die Buchse 2d'' gesteckten Achse 2g freifen Hängelaschen 5b' des Belaghalters 5b an.

In dem an die Arme 2a angrenzenden Bereich des Fahrwerkrahmens 2 befindet sich eine Abstützung 2f für das bremszylinderseitige Ende der Radscheibenbremse. Diese Abstützung 2f besteht aus einem prismatisch ausgebildeten, über eine Befestigungsplatte an Futterstücken des Rahmens 2 angeschraubten Federkörper 2f' und einem Verbindungsteil 2f'', das einerseits den Federkörper 2f' dachartig umfaßt und andererseits zusammen mit dem Festpunkthebel 4a der Bremszange 4 an Bolzen 3a angeschlossen ist, die in den Bremszylinder 3 eingeschraubt sind.

Die beim Bremsen in Längsrichtung auftretenden Reaktionskräfte werden über Anschlagstücke 2c, die jeweils nach oben ragend an den Armen 2a des Fahrwerkrahmens 2 befestigt sind und in Nuten 5b'' der Belaghalter 5b eingreifen, direkt in den Fahrwerkrahmen 2 eingeleitet. Zwischen den Anschlagstücken 2c und dem Belaghalter 5b der Bremsbacke 5 besteht ein Querspiel, das dem zulässigen Verschleiß des Bremsbelages 5a entspricht.

Wie aus Fig. 5 ersichtlich, ist jedem Rad 1 eine Radscheibenbremse zugeordnet, die in einem hier symbolisch dargestellen Festpunkt 8 des Fahrwerkrahmens 2 abgestützt ist und jeweils den Bremszylinder 3, die Bremszange 4 und die Bremsbacken 5 aufweist. Das Bremsen des Fahrwerkes erfolgt im Fahrbetrieb durch Druckluft. Da Druckluft inbesondere bei einem über längere Zeit abgestellten Zug nicht zur Verfügung steht, ist eine Arretierung der Bremszangen 4 durch folgende Mechanik vorgesehen :

An den Bremszylindern 3 sind Handbremshebel 3b angelenkt, die jeweils über Bremszüge 6' mit den Enden von insgesamt zwei Verbindungshebeln 7 gekuppelt sind. In Längsmitte dieser Hebel 7 angreifende weitere Bremszüge 6'' sind an einem nicht dargestellten, vorzugsweise im Inneren des Wagenkastens angeordneten Handbremsgetriebe angeschlossen, das beispielsweise über ein Handrad betätigbar ist. Bei Betätigen des Handbremsgetriebes verlagern sich die auf fahrwerkseitigen Gleitbahnen 2h geführten Verbindungshebel 7 in Richtung der gezeichneten Pfeile, und die Handbremshebel 3b bewegen die aus dem Boden der Bremszylinder 3 herausragenden Kolbenstangen 3c im Sinne des gewollten Verspannens der Bremszange 4 mit ihren Bremsbacken 5 gegen die Scheiben der Räder 1. Innerhalb der Bremszylinder 3 sind überlicherweise Rückholfedern für die Bremszangen 4 vorgesehen. Diese Rückholfedern und zusätzliche, zwischen dem Boden der Bremszylinder 3 und den Handbremshebeln 3a angeordnete Druckfedern 3d bewirken, daß die Verbindungshebel 7 in ihre dargestellte Ausgangsstellung zurückkehren. Die Druckfedern 3d sorgen im übrigen dafür, daß bei

3

Bremsungen mit Druckluft die Handbremshebel 3b und die Bremszüge 6 unter Spannung bleiben.

Die Bremszüge 6 werden in Ummantelungen 6a geführt, die rahmenseitig in Festpunkten 2m gehalten sind, so daß die Bremszüge 6 lediglich unter Beachten von Mindestradien gebogen anzuordnen sind.

**Patentansprüche**

1. Drehgestellartiges Fahrwerk für Schienenfahrzeuge, dessen Rahmen (2) jeweils ein Rad (1) gabelförmig umgreifende und mit Lagern (2b) für das Rad (1) versehene Arme (2a) aufweist, die jeweils zur Aufnahme einer im wesentlichen aus einem Bremszylinder (3), einer Bremszange (4) und Bremsbacken (5) bestehenden Radscheibenbremse ausgebildet sind, dadurch gekennzeichnet, daß die Radscheibenbremse (3, 4 und 5) oberhalb der Mittenebene des Rades (1) auf den Armen (2a) und dem an diese angrenzenden Bereich des Fahrwerkrahmens (2) angeordnet ist, wobei alle in Längsrichtung auftretenden Bremsreaktionskräfte über Anschlagstücke (2c), die jeweils nach oben ragend an den Armen (2a) befestigt sind und formschlüssig mit den Bremsbacken (5) zusammenwirken, direkt in den Fahrwerkrahmen (2) eingeleitet werden.

2. Fahrwerk nach Anspruch 1, dadurch gekennzeichnet, daß jeder der beiden Arme (2a) einen Lagerbock (2d) aufweist, an dem eine Bremsbacke (5) in Querrichtung pendelnd aufgehängt ist.

3. Fahrwerk nach Anspruch 2, dadurch gekennzeichnet, daß der Lagerbock (2d) gegenüber der Oberseite des Armes (2a) abgefedert ist, beispielsweise durch eine dazwischen angeordnete Schicht (2e) aus elastischem Werkstoff.

4. Fahrwerk nach einem der Ansprüche 1 bis 3, dadurch gekennzeichnet, daß zwischen den Anschlagstücken (2c) und den Bremsbacken (5) ein Querspiel besteht, das dem zulässigen Verschleiß des Bremsbelages (5a) entspricht.

5. Fahrwerk nach einem der Ansprüche 1 bis 4, dadurch gekennzeichnet, daß der an die Arme (2a) angrenzende Bereich des Fahrwerkrahmens (2) mit einer das bremszylinderseitige Ende (3) der Radscheibenbremse tragenden Abstützung (2f) versehen ist.

6. Fahrwerk nach Anspruch 5, dadurch gekennzeichnet, daß die Abstützung (2f) einen prismatisch ausgebildeten Federkörper (2f') und ein Verbindungsteil (2f'') aufweist, das einerseits den Federkörper (2f') dachartig umfaßt und andererseits zusammen mit den Festpunkthebel (4a) der Bremszange (4) am Bremszylinder (3) angeschlossen ist.

7. Fahrwerk nach einem der Ansprüche 1 bis 6, dadurch gekennzeichnet, daß die Radscheibenbremsen mittels einer durch ein Handbremsgetriebe betätigbaren Fernbedienung (Bremszüge 6, Verbindungshebel 7) derart gekuppelt sind, daß die in Längsrichtung jeder Fahrwerkseite liegenden Radscheibenbremsen jeweils ein Bremspaar bilden.

8. Fahrwerk nach Anspruch 7, dadurch gekennzeichnet, daß die Fernbedienung für jedes Bremspaar einen in Längsrichtung des Fahrwerkrahmens (2) angeordneten Verbindungshebel (7) und in rahmenseitig gehaltenen Ummantelungen (6a) geführte Bremszüge (6) aufweist, die zum einen (Bremszüge 6') an den Enden des Verbindungshebels (7) und an den entsprechenden Radscheibenbremsen — z.B. an einem Handbremshebel (3b) des Bremszylinders (3) — angreifen und zum anderen(Bremszüge 6'') mittig am Verbindungshebel (7) und am Handbremsgetriebe angeschlossen sind.

9. Fahrwerk nach Anspruch 8, dadurch gekennzeichnet, daß die Verbindungshebel (7) auf Gleitbahnen (2h) des Fahrwerkrahmens (2) in dessen Querrichtung geführt sind.

**Claims**

1. A bogie-like chassis for rail vehicles, whose frame (2) has in each case arms (2a) which embrace a wheel (1) in a fork-like manner, are provided with bearings (2b) for the wheel (1) and are in each case constructed to receive a wheel-disk brake substantially composed of a brake cylinder (3), a brake clip (4) and brake shoes (5), characterized in that the wheel-disk brake (3, 4 and 5) is arranged above the central plane of the wheel (1), on the arms (2a) and the area of the chassis frame (2) adjacent to the arms, all braking reaction forces arising in the longitudinal direction being introduced directly into the chassis frame (2) via stop pieces (2c) which in each case are fastened to the arms (2a) in an upwards projecting manner and co-operate in a positive-locking manner with the brake shoes (5).

2. A chassis in accordance with Claim 1, characterized in that each of the two arms (2a) has a bearing block (2d) on which a brake shoe (5) is suspended so as to oscillate in the transverse direction.

3. A chassis in accordance with Claim 2, characterized in that the bearing block (2d) is sprung with regard to the upper side of the arm (2a), for example by a layer (2e) which is made of an elastic material and is arranged between them.

4. A chassis in accordance with any one of Claims 1 to 3, characterized in that there is transverse play between the stop pieces (2c) and the brake shoes (5), this transverse play corresponding to the permissible brake lining (5a) wear.

5. A chassis in accordance with any one of Claims 1 to 4, characterized in that the chassis-frame (2) area adjacent to the arms (2a) is provided with a support (2f) bearing the brake-cylinder-side end (3) of the wheel-disk brake.

6. A chassis in accordance with Claim 5, characterized in that the support (2f) has a connecting part (2f") and a prismatic spring-body (2f'), which connecting part on the one hand covers the spring body (2f') in a roof-like manner and on the other hand is, together with the fixed point lever (4a) of the brake clip (4), connected to the brake cylinder (3).

7. A chassis in accordance with any one of Claims 1 to 6, characterized in that the wheel-disk brakes are coupled, by means of distance control (brake cables 6, connecting lever 7) which can be actuated by a hand brake gear mechanism, in such a manner that in each case the wheel-disk brakes lying in the longitudinal direction of each chassis side form a brake pair.

8. A chassis in accordance with Claim 7, characterized in that distance control for each brake pair has both a connecting lever (7) arranged in the longitudinal direction of the chassis frame (2) and brake cables (6) guided in frame-side-held casings (6a), these brake cables (6) on the one hand (brake cables 6') engaging on the ends of the connecting lever (7) and on the corresponding wheel-disk brakes — e.g. on a hand brake lever (3b) of the brake cylinder (3) — and on the other hand (brake cables 6") being connected to the centre of the connecting lever (7) and to the hand brake gear unit

9. A chassis in accordance with Claim 8, characterized in that the connecting levers (7) are guided on slide ways (2h) of the chassis frame (2), in the transverse direction of the latter.

## Revendications

1. Châssis du type boggie pour véhicules ferroviaires, dont le cadre (2) présente des bras (2a) qui emprisonnent une roue respective (1) à la manière d'une fourche, sont pourvus de paliers (2b) pour ladite roue (1) et sont réalisés, à chaque fois, en vue de recevoir un frein à disque de roue comprenant, pour l'essentiel, un cylindre de freinage (3), une griffe de freinage (4) et des mâchoires de freinage (5), caractérisé par le fait que le frein (3, 4 et 5) à disque de roue est disposé, au-dessus du plan médian de la roue (1), sur les bras (2a) et dans la région du cadre (2) du châssis qui est adjacente à ces bras, toutes les forces de réaction au freinage développées dans le sens longitudinal étant directement induites, dans le cadre (2) du châssis, par l'intermédiaire de pièces de butée (2c) qui sont fixées aux bras (2a) en faisant respectivement saillie vers le haut, et coopèrent par concordance de formes avec les mâchoires de freinage (5).

2. Châssis selon la revendication 1, caractérisé par le fait que chacun des deux bras (2a) présente un sabot de portée (2d), auquel une mâchoire de freinage (5) est suspendue à oscillation dans le sens transversal.

3. Châssis selon la revendication 2, caractérisé par le fait que le sabot de portée (2d) est amorti élastiquement par rapport à la face supérieure du bras (2a), par exemple au moyen d'une couche intercalaire (2e) en un matériau élastique.

4. Châssis selon l'une des revendications 1 à 3, caractérisé par le fait qu'un jeu transversal, existant entre les pièces de butée (2c) et les mâchoires de freinage (5), correspond à l'usure admissible de la garniture de freinage (5a).

5. Châssis selon l'une des revendications 1 à 4, caractérisé par le fait que la région du cadre (2) du châssis adjacente aux bras (2a) est munie d'un organe de soutien (2f), portant l'extrémité (3) du frein à disque de roue qui est située côté cylindre de freinage.

6. Châssis selon la revendication 5, caractérisé par le fait que l'organe de soutien (2f) comprend un corps élastique (2f') de réalisation prismatique, ainsi qu'une pièce de solidarisation (2f") qui entoure d'une part le corps élastique (2f') à la manière d'une toiture, et est d'autre part rattachée au cylindre de freinage (3) conjointement au levier (4a) à point fixe de la griffe de freinage (4).

7. Châssis selon l'une des revendications 1 à 6, caractérisé par le fait que les freins à disque de roue sont accouplés, au moyen d'une télécommande (câbles de freinage 6, bielles de solidarisation 7) actionnable par l'intermédiaire d'une transmission de freinage manuel, de telle sorte que les freins à disque de roue, s'étendant dans le sens longitudinal de chaque côté du châssis, forment respectivement une paire de freins.

8. Châssis selon la revendication 7, caractérisé par le fait que la télécommande associée à chaque paire de freins comprend une bielle de solidarisation (7) disposée dans le sens longitudinal du cadre (2) du châssis, ainsi que des câbles de freinage (6) qui sont guidés dans des gaines (6a) retenues côté cadre, dont les uns (câbles de freinage 6′) sont en prise avec les extrémités de la bielle de solidarisation (7) et avec les freins correspondants à disque de roue — par exemple avec un levier de frein à main (3b) du cylindre de freinage (3) —, et dont les autres (câbles de freinage 6″) sont reliés centralement à la bielle de solidarisation (7) et à la transmission de freinage manuel.

9. Châssis selon la revendication 8, caractérisé par le fait que les bielles de solidarisation (7) sont guidées sur des pistes de glissement (2h) du cadre (2) du châssis, dans le sens transversal de ce dernier.

Fig.1

Fig.2

EP 0 325 117 B1

Fig.3

Fig.4

Fig.5

EP 0 325 117 B1